# FASCICULE DE BREVET EUROPEEN

(11) **EP 0 880 330 B1**
(45) Date de publication et mention de la délivrance du brevet: **24.05.2000**
(21) Numéro de dépôt: 97901072.5
(22) Date de dépôt: 21.01.1997
(51) Int. Cl.: A47J 31/06

(54) **PORTE-FILTRE POUR MACHINE A CAFE DU TYPE "ESPRESSO"**
FILTER-TRÄGER FÜR EINE ESPRESSO-KAFFEEMASCHINE
FILTER-HOLDER FOR COFFEE MACHINE OF THE ESPRESSO TYPE

(30) Priorité: 25.01.1996 FR 9600882
(43) Date de publication de la demande: 02.12.1998
(73) Titulaire: Robert Krups GmbH & Co. KG, 42719 Solingen (DE)
(72) Inventeur: MATUSCHEK, Manfred, D-42719 Solingen (DE)
(74) Mandataire: Busquets, Jean-Pierre
(86) Numéro de dépôt international: EP9700261
(87) Numéro de publication internationale: WO9726815

(56) Documents cités:
- EP-A- 0 264 352
- EP-A- 0 449 792
- EP-A- 0 682 902
- FR-A- 2 636 828

## Description

La présente invention se rapporte à un porte-filtre destiné à être monté sur une machine à café du type "espresso" et comprenant une coupelle adaptée à recevoir un filtre qui est destiné à contenir une dose de mouture de café et qui présente un fond perforé, un corps disposé dans la coupelle en dessous du filtre et pourvu d'au moins un entonnoir de distribution dont l'extrémité inférieure débouche du fond de la coupelle, une chambre collectrice d'infusion agencée entre le fond du filtre et la face supérieure du corps et débouchant dans un couloir de sortie de l'infusion dont le débouché communique avec ledit entonnoir permettant à l'infusion de s'écouler hors de la coupelle, ainsi qu'un dispositif de confection de mousse.

Dans un porte-filtre connu de ce genre (voir EP-A-449792), utilisé dans une cafetière "espresso" amenant l'eau chaude sur la mouture de café contenue dans le filtre à une pression de 10 à 15 bars, la production de mousse dans l'infusion sortant du filtre est réalisée par passage de l'infusion à travers une soupape de surpression montée dans la face supérieure du corps et faisant communiquer le débouché du couloir de sortie de l'infusion avec l'entonnoir de distribution. Toutefois, une telle soupape de surpression est un composant coûteux et son montage dans la face supérieure du corps s'avère difficile à effectuer.

L'invention a notamment pour but de remédier à ces inconvénients et de réaliser un porte-filtre, du type exposé ci-dessus, qui soit équipé d'une manière simple et à moindre coût d'un dispositif permettant de produire une mousse abondante et dense de l'infusion.

Selon l'invention, le couloir s'étend annulairement autour d'un bossage ménagé sur la face supérieure du corps, et le dispositif de confection de mousse comporte un joint élastique annulaire agencé autour du bossage, propre à obturer le débouché du couloir et qui est déformable par expansion sous l'effet de la pression régnant dans la chambre collectrice de manière à former au moins un passage mettant en communication ledit débouché avec l'entonnoir afin de permettre l'écoulement de l'infusion.

Ainsi, ce joint annulaire déformable élastiquement par expansion constitue un moyen simple permettant d'obtenir, par suite de son expansion, un mélange air-infusion suffisamment important pour créer une mousse épaisse dans le café recueilli. De plus, ce joint est peu onéreux et est parfaitement adapté à une fabrication en grande série de ces porte-filtre.

Selon une autre caractéristique avantageuse de l'invention, le corps comprend deux entonnoirs ménagés symétriquement de part et d'autre du bossage, et le porte-filtre comprend en outre une chambre annulaire de distribution concentrique au joint, comportant deux orifices débouchant respectivement dans les deux entonnoirs, et qui est pourvue de cloisons de cerclage d'une partie seulement de la périphérie du joint de manière à laisser libres deux secteurs périphériques dudit joint qui sont diamétralement opposés, qui s'étendent dans un plan perpendiculaire à celui passant par les extrémités supérieures des deux entonnoirs, et qui sont destinés à se déformer par expansion de manière à former deux passages débouchant dans la chambre de distribution et permettant un écoulement de l'infusion qui est réparti d'une manière égale dans les deux entonnoirs via lesdits orifices.

Ainsi, lors de la préparation de deux tasses à café placées en dessous des deux entonnoirs, on obtient, grâce à la disposition particulière des deux passages de l'infusion par rapport aux deux entonnoirs, le même écoulement de café à travers les deux entonnoirs, et partant, la même quantité de café dans chacune des deux tasses.

Les caractéristiques et avantages de l'invention ressortiront d'ailleurs de la description qui va suivre, à titre d'exemple non limitatif, en référence aux dessins annexés dans lesquels :
- la figure 1 est une vue en coupe verticale d'un porte-filtre selon l'invention, montrant le porte-filtre avant l'amenée d'eau chaude ;
- la figure 2 est une vue partielle de dessus d'un corps monté dans le porte-filtre de la figure 1 ;
- la figure 3 est une vue analogue à la figure 1, montrant le porte-filtre lors de l'amenée d'eau chaude ; et
- la figure 4 est une vue analogue à la figure 2, pour le porte-filtre de la figure 3.

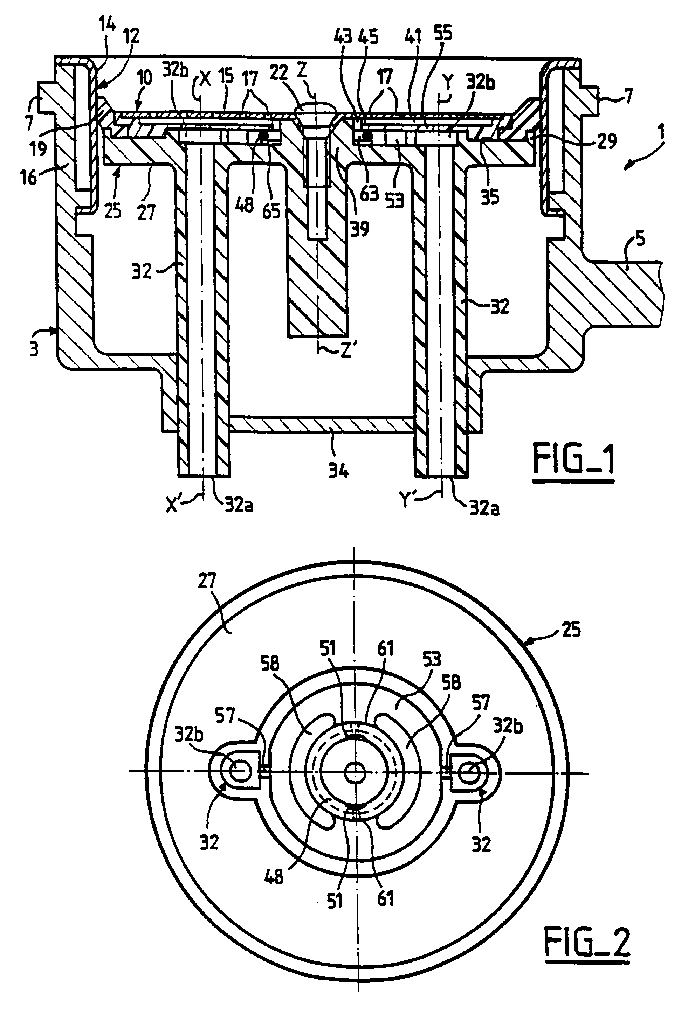

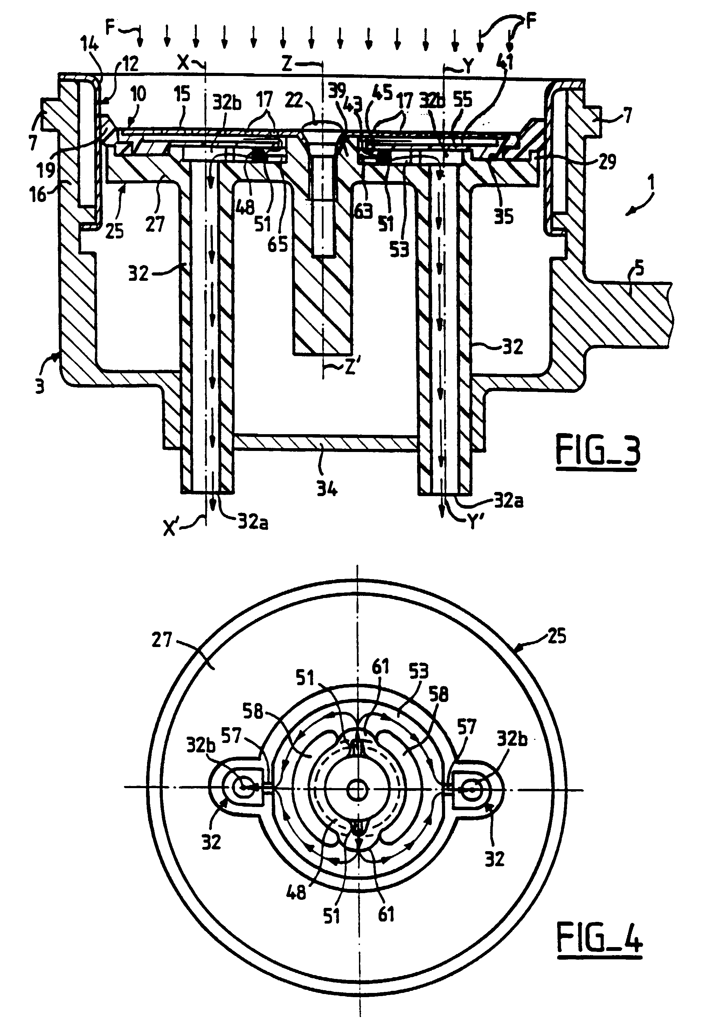

Le porte-filtre 1 représenté aux figures 1 et 3 est destiné à être monté sur une machine à café du type "espresso" et comprend une coupelle 3 comportant une prolongation latérale 5 sur laquelle est fixé un manche (non représenté) permettant sa manipulation, et portant sur son pourtour extérieur des saillies 7 destinées à s'accoupler à baïonnette avec un dispositif d'accrochage présent sur une tête de percolation (non représentée), de type connu en soi, destinée à l'écoulement d'eau chaude sous pression.

Dans la coupelle 3 est disposé un filtre 10 destiné à contenir une dose de mouture de café et qui est formé, dans l'exemple de réalisation illustré aux figures 1 et 3, par une cage 12 à paroi latérale cylindrique 14 solidaire de la paroi latérale 16 de la coupelle 3, et par un fond plat 15 muni de perforations 17 et qui vient reposer par sa périphérie sur un joint d'étanchéité annulaire 19 appliqué contre la paroi latérale 14 de la cage 12.

Le fond perforé 15 du filtre 10 est fixé, de préférence en son centre, par exemple au moyen d'une vis 22, dans un corps 25 logé dans la coupelle 3 en dessous du filtre 10 et constitué d'une embase cylindrique 27 dont le bord périphérique 29 est ancré dans le joint d'étanchéité 19 et qui se prolonge vers le bas par deux entonnoirs de distribution 32, d'axes verticaux respectifs XX' et YY', dont leur extrémité inférieure 32a débouche du fond 34 de la coupelle 3 et dont leur extrémité supérieure 32b débouche de la face supérieure 35 de l'embase 27. Sur cette face supérieure 35 de l'embase 27 est ménagé un bossage cylindrique 39, d'axe vertical ZZ', dans lequel est vissé le fond 15 du filtre 10. Comme le montrent les figures 1 et 3, les deux entonnoirs 32 sont disposés symétriquement par rapport à l'axe ZZ' du bossage 39.

Le porte-filtre 1 comprend en outre une chambre annulaire 41 collectrice d'infusion qui est agencée entre le fond perforé 15 du filtre 10 et la face supérieure 35 de l'embase 27 et qui débouche dans un couloir 43 de sortie de l'infusion dont le débouché 45 communique avec chacun des deux entonnoirs 32, permettant à l'infusion recueillie de s'écouler, hors de la coupelle 3, dans deux tasses à café placées en dessous.

Selon l'invention, le couloir 43 s'étend annulairement autour du bossage 39 et le porte-filtre 1 est équipé d'un dispositif de confection de mousse comportant un joint élastique annulaire 48 agencé autour du bossage 39, propre à obturer le débouché 45 du couloir 43 (figure 1) et qui est déformable par expansion sous l'effet de la pression de l'eau traversant la mouture de café et régnant dans la chambre collectrice 41 de manière à former au moins un passage 51 (figure 3) mettant en communication ledit débouché 45 avec l'entonnoir correspondant 32 afin de permettre l'écoulement de l'infusion.

De préférence, le joint 48 est réalisé en un matériau élastomère, tel que par exemple un caoutchouc silicone.

Comme le montrent les figures 1 et 3, dans cet exemple de réalisation, le porte-filtre comprend également une chambre annulaire de distribution 53 ménagée dans l'embase 27, concentriquement au joint 48, et qui est séparée de la chambre collectrice 41 par une plaquette 55 agencée entre le fond 15 du filtre 10 et la face supérieure 35 de l'embase 27. Cette chambre de distribution 53, mieux visible aux figures 2 et 4, comporte deux orifices 57 débouchant respectivement dans les deux entonnoirs 32 et est pourvue de deux cloisons verticales 58 de cerclage d'une partie seulement de la périphérie du joint 48 de manière à laisser libres deux secteurs périphériques 61 dudit joint qui sont diamétralement opposés et qui s'étendent dans un plan perpendiculaire à celui passant par les extrémités supérieures 32b des deux entonnoirs 32. Ces deux secteurs libres 61 du joint 48 sont destinés à se déformer par expansion sous l'effet de la pression régnant dans la chambre collectrice 41 de manière à former deux passages 51 (figure 3) débouchant dans la chambre de distribution 53 et permettant un écoulement de l'infusion qui est réparti d'une manière égale dans les deux entonnoirs 32 via les orifices 57 (voir figure 4), assurant ainsi avantageusement la même quantité de café dans chacune des deux tasses.

Dans cet exemple, le débouché 45 du couloir 43 s'ouvre sur un canal périphérique 63 ménagé autour du bossage 39, obturé par le joint 48 (voir figures 1 et 2) et destiné, après expansion des deux secteurs libres 61 du joint 48, à communiquer directement avec les deux passages 51, respectivement (voir figure 3).

En regard de la figure 1, le joint 48 est monté sur un disque 65 placé autour du bossage 39 en étant appliqué sur la face supérieure 35 de l'embase 27, et est interposé en appui, avant expansion, entre la plaquette 55 et le disque 65. Lors de l'expansion des deux secteurs libres 61 du joint 48, ceux-ci se dégagent de la plaquette 55 pour former en dessous du joint 48 les deux passages 51 débouchant dans la chambre de distribution 53.

Ainsi, lorsque l'eau chaude sous pression (symbolisée par les flèches F sur la figure 3) est amenée sur la mouture de café contenue dans le filtre 10, l'infusion recueillie dans la chambre collectrice 41 passe dans le couloir 43, puis dans le canal 63, et provoque l'expansion des deux secteurs libres 61 du joint 48 (figure 4) de manière à s'écouler par les deux passages 51 en formant de la mousse au contact de l'air. L'infusion ainsi enrichie de mousse se répartit ensuite d'une manière égale dans la chambre de distribution 53 et s'écoule alors équitablement à travers les deux entonnoirs verseurs 32 via les deux orifices correspondants 57 (figure 4).

## Revendications

1. Porte-filtre destiné à être monté sur une machine à café du type "espresso" et comprenant une coupelle (3) adaptée à recevoir un filtre (10) qui est destiné à contenir une dose de mouture de café et qui présente un fond perforé (15), un corps (25) disposé dans la coupelle (3) en dessous du filtre (10) et pourvu d'au moins un entonnoir de distribution (32) dont l'extrémité inférieure débouche du fond (15) de la coupelle (3), une chambre annulaire (41) collectrice d'infusion agencée entre le fond (15) du filtre (10) et la face supérieure (35) du corps (25) et débouchant dans un couloir (43) de sortie de l'infusion dont le débouché (45) communique avec ledit entonnoir permettant à l'infusion de s'écouler hors de la coupelle, ainsi qu'un dispositif de confection de mousse,
**caractérisé en ce que** le couloir (43) s'étend annulairement autour d'un bossage (39) ménagé sur la face supérieure (35) du corps (25), et le dispositif de confection de mousse comporte un joint élastique annulaire (48) agencé autour du bossage (39), propre à obturer le débouché (45) du couloir (43) et qui est déformable par expansion sous l'effet de la pression régnant dans la chambre collectrice (41) de manière à former au moins un passage (51) mettant en communication ledit débouché (45) avec l'entonnoir (32) afin de permettre l'écoulement de l'infusion.

2. Porte-filtre selon la revendication 1,
**caractérisé en ce que** le corps (25) comprenant deux entonnoirs de distribution (32) ménagés symétriquement de part et d'autre du bossage (39), ledit porte-filtre comprend en outre une chambre de distribution (53) concentrique au joint (48), comportant deux orifices (57) débouchant respectivement dans les deux entonnoirs (32), et qui est pourvue de cloisons (58) de cerclage d'une partie seulement de la périphérie du joint (48) de manière à laisser libres deux secteurs périphériques (61) dudit joint (48) qui sont diamétralement opposés, qui s'étendent dans un plan perpendiculaire à celui passant par les extrémités supérieures (32b) des deux entonnoirs (32), et qui sont destinés à se déformer par expansion de manière à former deux passages (51) débouchant dans la chambre de distribution (53) et permettant un écoulement de l'infusion qui est réparti d'une manière égale dans les deux entonnoirs (32) via lesdits orifices (57).

3. Porte-filtre selon la revendication 2,
**caractérisé en ce que** le débouché (45) du couloir (43) s'ouvre sur un canal périphérique (63) ménagé autour du bossage (39), obturé par le joint (48) et destiné, après expansion des deux secteurs libres (61) dudit joint, à communiquer directement avec les deux passages (51) de l'infusion, respectivement.

4. Porte-filtre selon la revendication 2 ou 3,
**caractérisé en ce que** la chambre collectrice (41) et la chambre de distribution (53) sont séparées l'une de l'autre par une plaquette (55) agencée entre le fond (15) du filtre (10) et la face supérieure (35) du corps (25).

5. Porte-filtre selon la revendication 4,
**caractérisé en ce que** le joint (48) est monté sur un disque (65) disposé autour du bossage (39) et appliqué sur la face supérieure (35) du corps (25), ledit joint (48) étant interposé, avant expansion, en appui entre la plaquette (55) et le disque (65), et venant par ses deux secteurs libres (61) en dégagement dudit disque (65) lors de l'expansion desdits secteurs (61) pour former les deux passages (51) débouchant dans la chambre de distribution (53).

6. Porte-filtre selon l'une quelconque des revendications précédentes,
**caractérisé en ce que** le joint (48) est réalisé en un matériau élastomère, tel qu'un caoutchouc silicone.

## Patentansprüche

1. Filterträger zur Montage an einer Espresso-Kaffeemaschine mit einer Schale (3) zur Aufnahme eines Filters (10), der zur Aufnahme einer Dosis Kaffeemehl bestimmt ist und einen perforierten Boden (15) aufweist, einem in der Schale (3) unterhalb des Filters (10) angeordneten Körper (25), der mit mindestens einem Verteilertrichter (32) versehen ist, dessen unteres Ende vom Boden (34) der Schale (3) aus mündet, einer ringförmigen Getränk-Auffangkammer (41), die zwischen dem Boden (15) des Filters (10) und der oberen Seite (35) des Körpers (25) angeordnet ist und in einen Ablaufkanal (43) des Getränks mündet, dessen Mündung (45) mit dem Trichter in Verbindung steht, wodurch das Getränk aus der Schale ablaufen kann, sowie mit einer Vorrichtung zur Herstellung von Schaum, **dadurch gekennzeichnet, daß** der Kanal (43) sich ringförmig um einen Vorsprung (39) erstreckt, der an der oberen Seite (35) des Körpers (25) ausgebildet ist, und die Vorrichtung zur Herstellung von Schaum eine elastische ringförmige Dichtung (48) aufweist, die rings um den Vorsprung (39) angeordnet und geeignet ist, die Mündung (45) des Kanals (43) zu verschließen, und die durch Ausdehnung unter der Wirkung des in der Auffangkammer (41) herrschenden Drucks so verformbar ist, daß mindestens ein Durchlaß (51) gebildet wird, der die Mündung (45) mit dem Trichter (32) in Verbindung bringt, um das Ablaufen des Getränks zu ermöglichen.

2. Filterträger nach Anspruch 1, **dadurch gekennzeichnet, daß** der Körper (25) zwei Verteilertrichter (32) aufweist, die symmetrisch beiderseits des Vorsprungs (39) angeordnet sind, der Filterträger außerdem eine zur Dichtung (48) konzentrische Verteilerkammer (53) mit zwei Öffnungen (57) aufweist, die jeweils in die zwei Trichter (32) münden und die mit Trennwänden (58) versehen ist, welche nur einen Teil des Umfangs der Dichtung (48) so umgreifen, daß zwei diametral entgegengesetzte Umfangssektoren (61) der Dichtung (48) freigelassen werden, die sich in einer Ebene senkrecht zu der Ebene erstrecken, die durch die oberen Enden (32b) der zwei Trichter (32) geht, und die dazu bestimmt sind, sich durch Ausdehnung so zu verformen, daß zwei Durchlässe (51) gebildet werden, die in der Verteilerkammer (53) münden und ein Ablaufen des Getränks ermöglichen, das durch die Öffnungen (57) in gleichmäßiger Weise in die zwei Trichter (32) verteilt wird.

3. Filterträger nach Anspruch 2, **dadurch gekennzeichnet, daß** die Mündung (45) des Kanals (43) sich zu einem Umfangskanal (63) öffnet, der rings um den Vorsprung (39) ausgebildet und durch die Dichtung (48) verschlossen ist und nach der Ausdehnung der zwei freien Sektoren (61) der Dichtung direkt mit den zwei Durchlässen (51) des Getränks in Verbindung stehen.

4. Filterträger nach Anspruch 2 oder 3, **dadurch gekennzeichnet, daß** die Auffangkammer (41) und die Verteilerkammer (53) durch eine zwischen dem Boden (15) des Filters (10) und der Oberseite (35) des Körpers (25) angeordnete Platte (55) voneinander getrennt sind.

5. Filterträger nach Anspruch 4, **dadurch gekennzeichnet, daß** die Dichtung (48) auf einer rings um den Vorsprung (39) angeordneten und gegen die Oberseite (35) des Körpers (35) gedrückten Scheibe (65) montiert ist, wobei die Dichtung (48) vor ihrer Ausdehnung zwischen der Platte (55) und der Scheibe (65) angedrückt ist und mit ihren zwei freien Sektoren (61) bei deren Ausdehnung von der Scheibe (65) frei kommt, um die zwei Durchlässe (51) zu bilden, welche in die Verteilerkammer (53) münden.

6. Filterträger nach einem der vorangehenden Ansprüche, **dadurch gekennzeichnet, daß** die Dichtung (48) aus einem Elastomermaterial, wie einem Silikonkautschuk, hergestellt ist.

## Claims

1. Filter-holder intended to be mounted on a coffee machine of the "espresso" type and comprising a cup (3) adapted to receive a filter (10) which is intended to contain a portion of ground coffee and which has a perforated base (15), a body (25) disposed in the cup (3) below the filter (10) and provided with at least one distribution funnel (32) whose bottom end opens out from the base (15) of the cup (3), an annular infusion collecting chamber (41) arranged between the base (15) of the filter (10) and the top face (35) of the body (25) and opening out in an exit channel (43) for the infusion whose outlet (45) communicates with said funnel enabling the infusion to flow out of the cup, and a foam-making device, **characterised in that** the channel (43) extends annularly around a protrusion (39) provided on the top face (35) of the body (25), and the foam-making device comprises an annular resilient joint (48) arranged around the protrusion (39), able to close off the outlet (45) of the channel (43) and which is deformable by expansion under the effect of the pressure prevailing in the collecting chamber (41) so as to form at least one passage (51) putting the outlet (45) in communication with the funnel (32) to allow the flow of the infusion.

2. Filter-holder according to claim 1,
**characterised in that**, the body (25) comprising two distribution funnels (32) provided symmetrically on each side of the protrusion (39), the filter-holder also comprises a distribution chamber (53) concentric with the joint (48), having two orifices (57) opening out respectively in the two funnels (32), and which is provided with partitions (58) encircling only part of the periphery of the joint (48) so as to leave free two peripheral sectors (61) of the joint (48) which are diametrically opposite, which extend in a plane perpendicular to the one passing through the top ends (32b) of the two funnels (32), and which are intended to deform by expansion so as to form two passages (51) opening out in the distribution chamber (53) and allowing a flow of the infusion which is distributed equally in the two funnels (32) via the orifices (57).

3. Filter-holder according to claim 2,
**characterised in that** the outlet (45) of the channel (43) opens out on a peripheral channel (63) provided around the protrusion (39), closed off by the joint (48) and intended, after expansion of the two free sectors (61) of the joint, to communicate directly with the two infusion passages (51), respectively.

4. Filter-holder according to claim 2 or 3,
**characterised in that** the collecting chamber (41) and the distribution chamber (53) are separated from each other by a plate (55) arranged between the bottom (15) of the filter (10) and the top face (35) of the body (25).

5. Filter-holder according to claim 4,
**characterised in that** the joint (48) is mounted on a disc (65) disposed around the protrusion (39) and applied to the top face (35) of the body (25), said joint (48) being interposed, before expansion, in abutment between the plate (55) and the disc (65), and coming, through its two free sectors (61), clear of the disc (65) when the sectors (61) expand in order to form the two passages (51) opening out in the distribution chamber (53).

6. Filter-holder according to anyone of the preceding claims, characterised in that the joint (48) is produced from an elastomeric material, such as a silicone rubber.
